Europäisches Patentamt

European Patent Office

Office européen des brevets

(11) Veröffentlichungsnummer: **0 368 056**

**A1**

# (12) EUROPÄISCHE PATENTANMELDUNG

(21) Anmeldenummer: 89119441.7

(22) Anmeldetag: 19.10.89

(51) Int. Cl.⁵: **B61B 13/04, B62D 65/00**

(30) Priorität: 27.10.88 DE 3836642

(43) Veröffentlichungstag der Anmeldung:
16.05.90 Patentblatt 90/20

(84) Benannte Vertragsstaaten:
AT BE CH DE ES FR GB IT LI LU NL SE

(71) Anmelder: **Voest-Alpine Maschinenbau
Gesellschaft m.b.H.
Lunzerstrasse 64
A-4020 Linz(AT)**

(72) Erfinder: **Schnitzhofer, Nikolaus
Aubrunnerweg 25
A-4040 Linz(AT)**
Erfinder: **Dürr, Stefan
Neubaustrasse 16
A-4300 St. Valentin(AT)**
Erfinder: **Haas, Albin
Raaderstrasse 5
A-4482 Ennsdorf(AT)**
Erfinder: **Wenter, Thomas
Hörzingerstrasse 64
A-4020 Linz(AT)**

(74) Vertreter: **Finck, Dieter et al
Patentanwälte v. Füner, Ebbinghaus, Finck
Mariahilfplatz 2 & 3
D-8000 München 90(DE)**

(54) **Einschienenhängebahnanlage.**

(57) Die Einschienenhängebahnanlage mit auf Profilschienen selbstfahrenden Fahrbetriebsmitteln (9) dient zur Beförderung zu montierender Teile oder Baugruppen. Die Anlage erstreckt sich über mehrere Etagen (1,10) und hat mindestens eine Hub- und Senkstation (13). Die Anlage verfügt ferner über mindestens einen Streckenabschnitt (5), an dem zwei Profilschienen (6, 7) in geringem Abstand verlaufen. An einem solchen Streckenabschnitt (5) ist eine Hub- und Senkstation (13) mit über einen gemeinsamen Antrieb (20) gegensinnig bewegbaren Hubschlitten (16, 17; 21, 24) angeordnet.

FIG. 1

## Einschienenhängebahnanlage

Die Erfindung handelt von Einschienenhängebahnanlagen mit auf Profilschienen selbstfahrenden Fahrbetriebsmitteln, welche Anlagen sich über mehrere Etagen erstrecken und mindestens eine Hub- und Senkstation enthalten.

Einschienenhängebahnanlagen werden in Fertigungslinien zur Förderung zu montierender Teile oder Baugruppen eingesetzt, z. B. in der Automobilindustrie. Moderne Fertigungslinien sind für mehrere Produktvarianten eingerichtet, die oft noch in verschiedenen Ausstattungsvarianten auf derselben Fertigungslinie hergestellt werden. Trotzdem muß ein möglichst kontinuierlicher Fertigungsablauf gesichert sein.

Das bedingt Verzweigungen, fakultative Zwi-schenschleifen, Speicherzonen und ein Identifika-tionssystem, das die einzelnen Fahrbetriebsmittel direkt oder über einen zentralen Leitrechner je nach ihrer Fracht zu den einzelnen Bearbeitungs-stationen lenkt. Zwischenschleifen und Speicherzo-nen werden meist in Etagen eingerichtet, die über oder unter der Hauptfertigungslinie liegen. Das erfordert Hub- und Senkstationen, die aber relativ teuer und sehr langsam sind. Genaue Zeitstudien haben gezeigt, daß eine Steigerung der Hubgeschwindigkeiten keine Abhilfe bringt, weil die meiste Zeit durch Positionieren der Fahrbetriebsmittel mit reduzierter Geschwindigkeit, Positionieren des Hubschlittens und durch Leerhübe verlorengeht.

Ein einfaches Beispiel einer derartigen Anlage ist in den VDI-Richtlinien VD 2345 "Hängebahnen" in Bild 1 dargestellt. Die dort eingesetzten Hub- und Senkstationen entsprechen etwa denen der DE-OS 36 06 070. In diesem Bild 1 sind die von den Hub- und Senkstationen zu bedienenden Unterschleifen nicht dargestellt. Es ist aber zu erkennen, daß die Hub-und Senkstationen aufgrund ihrer Diskontinuität in dieser Anlage einen sehr störenden Engpaß bilden.

Es ist Aufgabe der Erfindung, eine Einschienenhängebahnanlage und die dazugehörige Hub- und Senkstation so zu gestalten, daß dieser Engpaß mit minimalem Mehraufwand beseitigt und Flexibilität bei der Disposition der Anlage gewonnen wird.

Zur Lösung dieser Aufgabe wird erfindungsgemäß vorgeschlagen, die Anlage so zu konstruieren, daß mindestens ein Streckenabschnitt entsteht, an dem 2 Profilschienen in geringem Abstand nebeneinander verlaufen, und an einem solchen Abschnitt eine Hub- und Senkstation mit 2 über einen gemeinsamen Antrieb gegensinnig bewegbaren Hubschlitten anzuordnen.

Dadurch werden nicht nur bei einer einsinnig (nur aufwärts oder abwärts) fördernden Hub- und Senkstation Leerfahrten vermieden, sondern bei einer in beiden Richtungen fördernden Station die Förderkapazität verdoppelt - praktisch ohne Mehraufwand, weil eine erfindungsgemäß gestaltete Hubstation anstelle des erforderlichen Gegengewichtes einen 2. Hubschlitten führt. Bei entsprechender Führung der Schienen in der oberen Etage (gemeinsame Unterschleife mit Weichen vor und nach der Hubstation) kann die Anlage flexibler gestaltet werden. In einer vorteilhaften Weiterbildung sind beide Hubschlitten in zwei dicht neben-einanderliegenden Führungen eines einzigen verti-kalen Rahmens geführt. Dadurch ist es auch möglich, eine solche Hub- und Senkstation ganz aus Teilen einer einfachen Hub- und Senkstation zusammenzustellen.

In einer vorteilhaften Weiterentwicklung weist die Anlage in der Etage der Hauptfertigungslinie mindestens vor und vorzugsweise auch nach der Hub- und Senkstation Weichen auf, die die beiden nebeneinander laufenden Profilschienen zu einer einzigen zusammenführen. Damit ist der Engpaß in einer Produktionslinie gänzlich beseitigt.

Wenn in weiterer Ausgestaltung und unter Benutzung des vorhandenen Identifikationssystems die Weiche vor der Hub- und Senkstation zum Sortieren, z. B. nach Ausstattungsvariante, eingesetzt wird, können auf der anderen Etage zwei getrennte Unterschleifen für die beiden Ausstattungsvarianten angeordnet sein. Die Bauteile werden dann nach Durchlaufen dieser Unterschleifen von der Hub- und Senkstation wieder abgesenkt und dort entweder wieder zusammengeführt oder getrennt weitergeführt, je nachdem, ob sich nach der Hub- und Senkstation wieder eine Weiche befindet.

Es ist aber auch möglich, auf der anderen Etage eine einzige Unterschleife mittels Weichen auf beide Seiten der Hub- und Senkstation zu verzweigen, dadurch wird bei unregelmäßiger Auf-einanderfolge der verschiedenen Ausstattungsvari-anten mit Hilfe des Identifikationssystems eine bessere Auslastung der Hub- und Senkstation erreicht.

Soll auch noch eine Standardvariante hergestellt werden, ist durch Ausbildung eines oder beider Hubschlitten mit zwei Etagen die Möglichkeit gegeben, Fahrbetriebsmittel mit der Standardvariante ohne Zeitverlust durch die Hub- und Senkstation durchfahren zu lassen.

Um schließlich noch Wartezeiten oder Leerläufe einzelner Hubschlitten zu vermeiden, ist es vorteilhaft, mindestens in der Hauptfertigungsetage vor der Hub- und Senkstation Pufferzonen vorzusehen.

Die Erfindung wird im folgenden anhand von Figuren erläutert.

Fig. 1: Erfindungsgemäße Anlage schematisch

Fig. 2: Ansicht einer erfindungsgemäßen Hub- und Senkstation im Vertikalschnitt in Fahrtrichtung gesehen, strichliert eine Variante

Fig. 3: Variante der erfindungsgemäßen Anlage mit 1 Speicherschleife und Weichen auch in der oberen Etage in schematischer Darstellung

Fig. 4: Andere Variante der erfindungsgemäßen Anlage in schematischer Darstellung

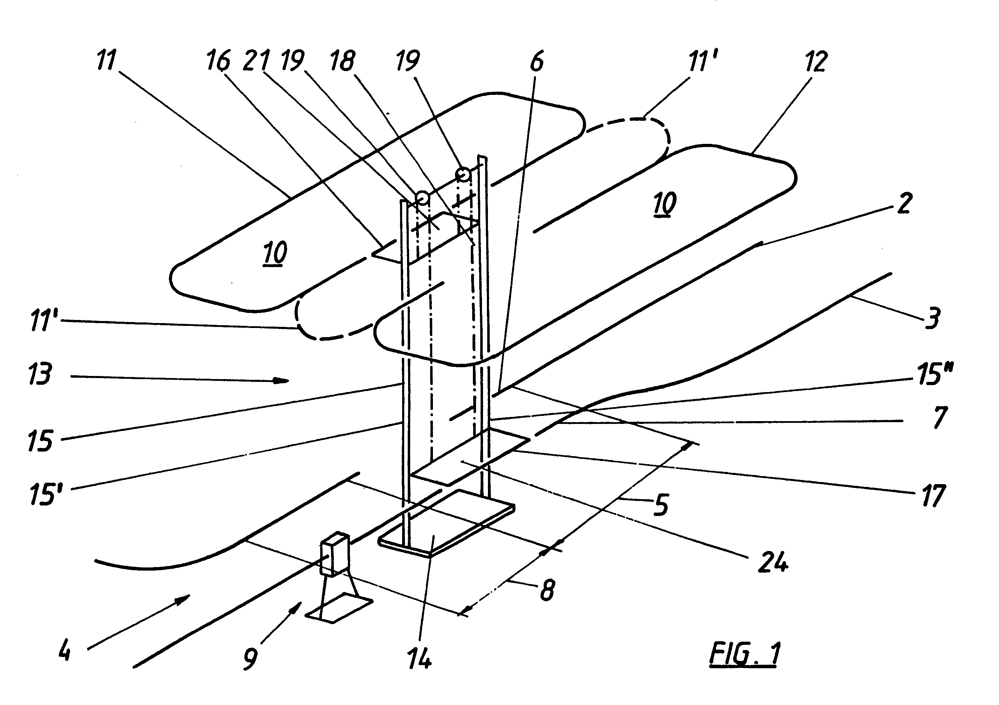

Fig. 1 zeigt die erfindungsgemäße Einschienenhängebahnanlage in ihrer einfachsten Form. In einer ersten Etage (1) laufen zwei Schienenstränge (2, 3) in der Hauptfertigungsrichtung (4). Im Streckenabschnitt (5) verlaufen Schienenabschnitte (6, 7) in geringer Entfernung. Das ist jene Minimalentfernung der beiden Schienenabschnitte (6, 7) in der noch gewährleistet ist, daß die beförderten Werkstücke einander fit Sicherheit nicht berühren können.

In einer zweiten Etage (10) verlaufen beispielsweise zwei Unterschleifen (11, 12), die sowohl als Montageschleife als auch als Zwischenspeicher dienen können.

Die erste Etage (1) und die zweite Etage (10) sind durch eine Hub- und Senkstation (13) miteinander verbunden. An dieser sind Hubschienen (16, 17) so aufgehängt, daß sie sich gegensinnig zwischen den beiden Etagen (1, 10) bewegen können und in ihren Endstellungen jeweils mit den ortsfesten Strängen (11 und 7 oder 12 und 6) fluchten.

In der in Fig. 1 abgebildeten Stellung hat die linke Hubschiene (16) eben die zweite Etage erreicht und kann ein Fahrbetriebsmittel (9) an die Schleife (11) abgeben und ein weiteres Fahrbetriebsmittel von der Schleife (11) aufnehmen. Gleichzeitig kann ein weiteres Fahrbetriebsmittel die eben auf der Ebene (1) angekommene Hubschiene (17) in Hauptfertigungsrichtung (4) verlassen und ein weiteres Fahrbetriebsmittel kann auf die Hubschiene (17) fahren, um entweder mit dem nächsten Arbeitstakt auf die Schleife (12) der zweiten Etage (10) gehoben zu werden oder die Hubschiene (17) in Hauptfertigungsrichtung (4) wieder verlassen, ohne angehoben worden zu sein.

In letzterem Fall kann also die Hub- und Senkstation (13) als Verzweigung eingesetzt werden, ohne daß eine Weiche notwendig wäre.

In der zweiten Etage (10) sind zwei getrennte Schleifen dargestellt, doch können je nach Produktionserfordernis beliebige Änderungen in der Streckenführung vorgenommen werden. So könnte die linke Schleife (11) etwa so geführt sein (11'), daß sie auf der rechten Seite der Hub- und Senkvorrichtung (13) endet, sie könnte aber auch offen sein, so daß sie die Hauptfertigungsebene (1) gar nicht mehr oder erst später erreicht.

In einer Pufferzone (8) auf der ersten Etage werden mehrere Fahrbetriebsmittel (9) bereitgehalten, damit jeder Hub der beiden Hubschienen (17 und 16) ausgenützt werden kann. Die Fahrtsteuerung der Fahrbetriebsmittel (9) wird in der für Einschienenhängebahnanlagen üblichen Weise über auf den Profilschienen vorgesehene Stromschienen (nicht dargestellt) gesteuert. Es ist zu erkennen, daß bei dieser Anlage nicht nur mittels einer Hub- und Senkvorrichtung (13) die doppelte Förderkapazität, sondern auch größere Flexibilität in der Gestaltung der ganzen Fertigungsanlage erreicht wird.

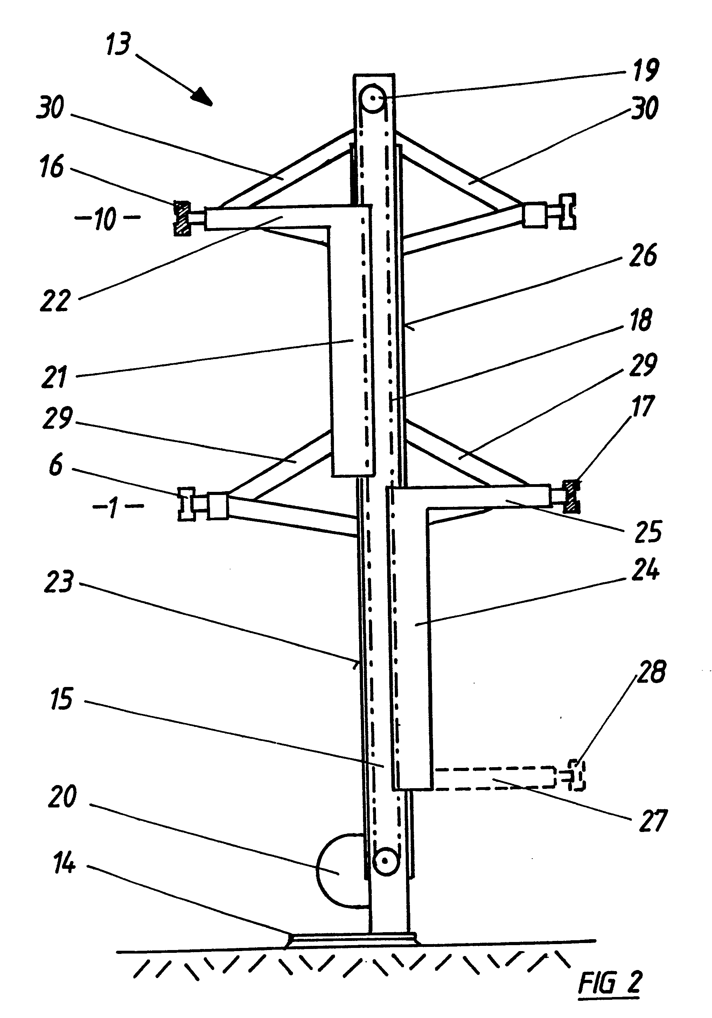

Die Hub- und Senkstation (13), im Detail abgebildet in Fig. 2, die Teil der ganzen Anlage ist, besteht im wesentlichen aus einem vertikalen Rahmen (15), der beispielsweise auf einer Fußplatte (14) aufruht. Zwischen vertikalen Führungsleisten (23, 26) ist ein linker Hubschlitten (21) und ein rechter Hubschlitten (24) vertikal geführt und mittels über Umlenkrollen (19) laufender Tragmittel (18) (z.B.: Ketten) verbunden und von einem Getriebemotor (20) angetrieben. Damit ist die gegenläufige Bewegung der beiden Hubschlitten (21, 24) erzwungen. Bezüglich des Schlittenantriebes wird auf die österreichische Patentanmeldung AT-A 2263/88 verwiesen.

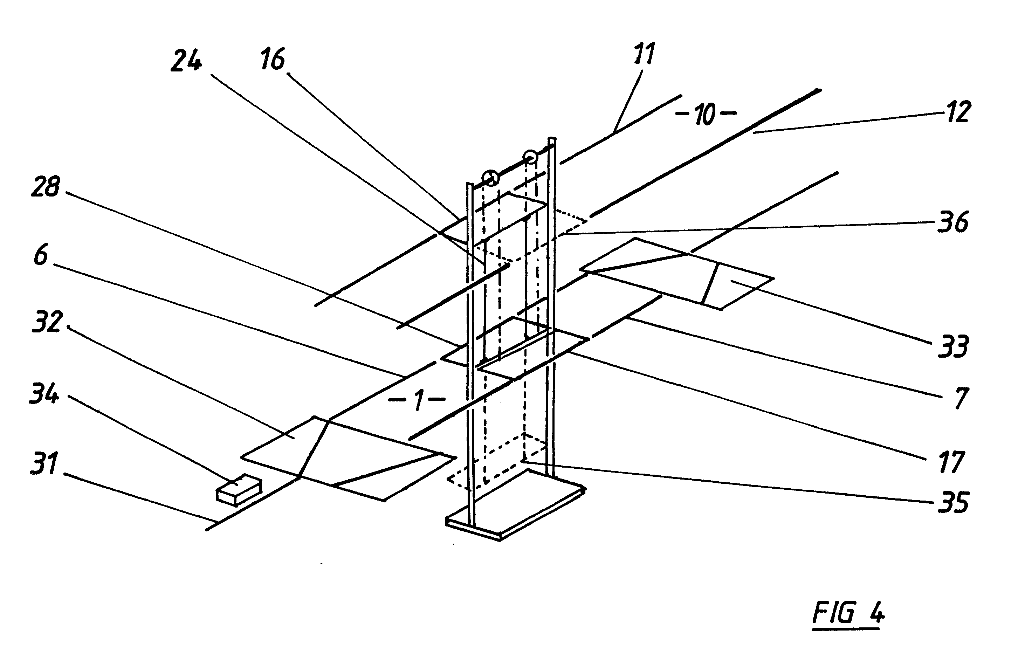

Der linke Hubschlitten (21) befindet sich in der zweiten Etage (10). An Tragarmen (22) ist die Hubschiene (16) aufgehängt. Sie deckt sich in der Fig. 2 mit der ortsfesten Schiene der Schleife (11) (verdeckt), die über die Schienenträger (30) mit dem Rahmen (15) verbunden sind. Der rechte Hubschlitten (24) hält über einen Tragarm die rechte Hubschiene (17), die sich mit dem ortsfesten Schienenstück (7) der ersten Etage (1) deckt. Auf dem rechten Hubschlitten (24) ist punktiert noch ein unterer Tragarm (27) mit einer unteren Hubschiene (28) dargestellt. Der Höhenunterschied zwischen dem Tragarm (25) und dem unteren Tragarm (27) ist aus in der Beschreibung der Fig. 4 erkennbaren Gründen gleich dem Höhenunterschied zwischen der ersten Etage (1) und der zweiten Etage (10).

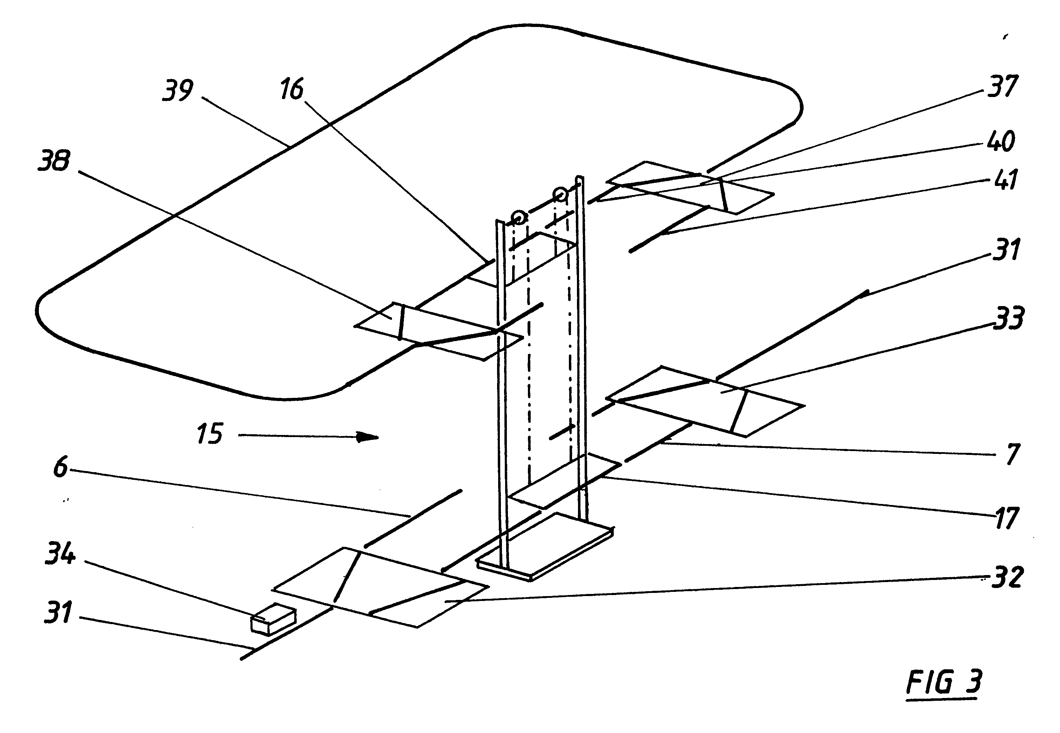

Fig. 3 zeigt eine erfindungsgemäße Anlage, die im wesentlichen der der Fig. 1 gleicht, jedoch mit folgenden Unterschieden: Vor und nach den Schienensträngen (6 und 7) der ersten Etage (1) sind Schiebeweichen (32, 33) angeordnet, wodurch die auf einer Hauptfertigungsschiene (31) kommenden Fahrbetriebsmittel wahlweise auf den linken Strang (6) oder den rechten Strang (7) geleitet und nachher wieder auf einen Strang zusammengeführt werden können. Vor der Schiebeweiche (32) ist ein Sensor (34) zur Identifikation der beförderten Werkstücke angeordnet, dessen Ausgangssignal entweder direkt oder über den zentralen Leitrechner das Stellen der Schiebeweichen bewirkt (nicht dargestellt). In der oberen Etage (10) sind die Schienenstücke (11, 12) über Weichen (37, 38) zu einer einzigen Schleife (39) zusammengeführt.

Fig. 4 zeigt eine weitere Variante der erfindungsgemäßen Anlage, die sich von der der Fig. 3 nur dadurch unterscheidet, daß ein doppelgeschoßiger linker Hubschlitten (34) eine obere Hubschiene (16) und eine untere Hubschiene (28) trägt, deren Abstand gleich dem Abstand der ersten Etage (1) und der zweiten Etage (10) ist.

Damit wird erreicht, daß ein Fahrbetriebsmittel auf dem Strang (6) über die untere Hubschiene (28) durch die Hub- und Senkstation (13) hindurchfahren kann, derweil ein anderes Fahrbetriebsmittel die Hubschiene (16) in der zweiten Etage (10) verläßt oder erreicht. In der anderen Endstellung befindet sich die untere Hubschiene (28) des linken Hubschlittens (34) unter der ersten Etage (1) (punktiert dargestellt) in der Stellung (35) und die rechte Hubschiene (17) in der punktiert dargestellten Stellung (36). Es ist natürlich möglich, auch den rechten Hubschlitten mit zwei Etagen auszuführen. Schließlich kann auch die Schiebeweiche (33) weggelassen werden, dann ist auf geringstem Raum eine 4-fache Verzweigung der Fertigungslinie möglich. Ein auf dem Strang (31) ankommendes Fahrbetriebsmittel kann dann je nach Resultat der Identitätserkennung (34) wahlweise auf einen der Schienenstränge (6, 7, 11 oder 12) geleitet werden. Auch hier ist die Anbringung einer Pufferstrecke vorteilhaft.

Die verschiedenen Elemente der in den Fig. 1 bis 4 dargestellten Anlagen können in beliebiger Weise kombiniert werden, wodurch sich neben einer erheblichen Erhöhung der Kapazität mit geringstem Mehraufwand viele durch die Forderung nach hoher Flexibilität des Produktionsablaufes bedingten Streckenführungsprobleme lösen lassen.

**Ansprüche**

1. Einschienenhängebahnanlage mit auf Profilschienen selbstfahrenden Fahrbetriebsmitteln (9) zur Beförderung zu montierender Teile oder Baugruppen, welche Anlage sich über mehrere Etagen (1, 10) erstreckt und mindestens eine Hub-und Senkstation (13) enthält, **dadurch gekennzeichnet, daß** die Anlage über mindestens einen Streckenabschnitt (5) verfügt, an dem zwei Profilschienen (6, 7) in geringem Abstand verlaufen, und daß an einem solchen Streckenabschnitt (5) eine Hub- und Senkstation (13) mit über einen gemeinsamen Antrieb (20) gegensinnig bewegbaren Hubschlitten (16, 17; 21, 24) angeordnet ist.

2. Einschienenhängebahnanlage nach Anspruch 1 **dadurch gekennzeichnet, daß** die Hub- und Senkstation (13) von einem zwischen den nebeneinander verlaufenden Profilschienen (6, 7) angeordneten senkrechten Rahmen (15) gebildet ist, dessen Seitenträger (15', 15'') je 2 parallele vertikale Führungen (23, 26) für die Hubschlitten (16, 17; 21, 24) aufweisen.

3. Einschienenhängebahnanlage nach Anspruch 1 **dadurch gekennzeichnet, daß** die in geringem Abstand laufenden Profilschienen (6, 7) einer Etage vor und vorzugsweise auch nach der Hubstation (13) über Weichen (32, 33) zu einer einzigen Profilschiene (31) zusammengeführt sind.

4. Einschienenhängebahnanlage nach Anspruch 3 mit einem Identifikationssystem für die einzelnen Fahrbetriebsmittel bzw. deren Fracht **dadurch gekennzeichnet, daß** die in geringem Abstand laufenden Profilschienen einer anderen Ebene (10) getrennte Schleifen (11, 12) bilden, die wieder zu dem ihnen zugewiesenen Hubschlitten (16, 17) zurücklaufen.

5. Einschienenhängebahnanlage nach Anspruch 3 mit einem Identifikationssystem für die einzelnen Fahrbetriebsmittel bzw. deren Fracht **dadurch gekennzeichnet, daß** die in geringem Abstand laufenden Profilschienen (11, 12) einer anderen Ebene (10) vor und nach der Hubstation (13) über Weichen (37, 38) zu einer einzigen Schleife (39) zusammengeführt sind.

6. Einschienenhängebahnanlage nach Anspruch 1 oder 3 **dadurch gekennzeichnet, daß** mindestens einer der Hubschlitten (34) selbst über zwei Hubschienen (16, 28) verfügt.

7. Einschienenhängebahnanlage nach Anspruch 1 oder 3 **dadurch gekennzeichnet, daß** auf einer Etage (1) auf mindestens einer Profilschiene in Fahrtrichtung unmittelbar vor der Hub- und Senkstation eine Pufferstrecke (8) eingerichtet ist.

FIG. 1

FIG 2

*FIG 3*

FIG 4

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | DE-C-3643662 (MANNESMANN AG) <br> * Spalte 3, Zeile 17 – Spalte 3, Zeile 58; Figuren 1-3 * <br> --- | 1 | B61B13/04 <br> B62D65/00 |
| A | EP-A-0168341 (SIEMENS AG) <br> * Seite 4, Zeile 31 – Seite 5, Zeile 17 * <br> * Seite 7, Zeile 31 – Seite 9, Zeile 24; Figuren 1-3 * <br> --- | 1 | |
| A | WO-A-8700493 (SYSMO S. A.) <br> * Seite 10, Absatz 3 – Seite 12, Absatz 1; Figuren 7, 8 * <br> ----- | 1 | |

| RECHERCHIERTE SACHGEBIETE (Int. Cl.5) |
|---|
| B61B <br> B61C <br> B62D <br> E01B <br> B61K <br> B66F |

Der vorliegende Recherchenbericht wurde für alle Patentansprüche erstellt

| Recherchenort | Abschlußdatum der Recherche | Prüfer |
|---|---|---|
| DEN HAAG | 13 MAERZ 1990 | CHLOSTA P. |